# EUROPEAN PATENT APPLICATION

(11) **EP 4 674 699 A1**
(43) Date of publication of application: **07.01.2026**
(21) Application number: 24306124.9
(22) Date of filing: 05.07.2024
(51) Int. Cl.: B60T 1/14

(54) **BRAKING SYSTEM FOR A RAILWAY VEHICLE, AND RAILWAY VEHICLE COMPRISING SUCH A BRAKING SYSTEM**

(71) Applicant: ALSTOM Holdings, 93400 Saint-Ouen-sur-Seine (FR)
(72) Inventor: SANDBERG, Asa, 72240 VÄSTERÅS (SE); ANDERSSON, Svante, 72481 VÄSTERÅS (SE); IREDALE, Christopher, LONG EATON, NG10 3HG (GB)
(74) Representative: Plasseraud IP

(57) **Abstract**

Braking system (1) for a railway vehicle (100), characterized in that it comprises at least:
- a rotating electric motor (3) suitable be installed onboard of the railway vehicle (100), said rotating electric motor (3) being configured to operate in a traction mode where it generates electric power suitable to be used for the traction of the railway vehicle (100), and in a passive mode where the motor (3) generates electric power suitable to be used for exerting a first braking force on at least one associated part of a wheelset (102) of the railway vehicle (100);
- an electrically-driven braking device (10) which is suitable to be installed on the railway vehicle (100) and is configured to exert a second braking force directly on a rail (105) along which the railway vehicle (100) is travelling, wherein said electrically-driven braking device (10) receives from and uses current generated by the electrically rotating motor (3) for generating said second braking force to be exerted directly on the rail (105).

## Description

The present invention relates to a braking system for railway vehicles, and to a railway vehicle comprising such braking system.

As known, an efficient brake system with very high reliability is essential not only of for the safe operation of railways vehicles but also for the entire railway network.

To avoid negatively impact the operations of entire railway lines that may risk derailment or collision, railway brake systems shall produce efforts for braking with a safety integrity equivalent to:
- SIL 2 equivalent for any service brake effort;
- SIL 4 equivalent for any emergency brake application.

At present, the braking systems utilized, even if performing their tasks in a satisfying way, present still some aspects worth of further improvements.

In particular, conventional braking systems are largely if not completely of mechanical type, and the use of several mechanical components, such as disc or tread brakes, entail significant costs at installation time and also during service life due to maintenance interventions required.

The present invention is aimed at providing a solution capable of at least partially mitigating such issue, and in particular to provide a braking system whose installation and maintenance costs are reduced with respect to known types of emergency braking systems, while keeping braking functionalities at the adequate standards of efficiency, reliability and safety.

This aim is achieved by a braking system for a railway vehicle, characterized in that it comprises at least:
- a rotating electric motor suitable be installed onboard of the railway vehicle, said rotating electric motor being configured to operate in a traction mode where it generates electric power suitable to be used for the traction of the railway vehicle, and in a passive mode where the motor generates electric power suitable to be used for exerting a first braking force on at least one associated part of a wheelset of the railway vehicle;
- an electrically-driven braking device which is suitable to be installed on the railway vehicle and is configured to exert a second braking force directly on a rail along which the railway vehicle is travelling, wherein said electrically-driven braking device receives from and uses current generated by the electrically rotating motor for generating said second braking force to be exerted directly on the rail.

In this way, the braking system according to the invention, allows replacing at least in part the traditional mechanical braking system used in known solutions, limiting the need of using such mechanical braking system at most just for parking/holding operations.

This aim is also achieved by a railway vehicle, notably a train, characterized in that it comprises a braking system as above indicated, and in particular, as defined in one or more of the appended claims.

Preferred embodiments of the invention are specified in the dependent claims, the contents of which are to be understood as an integral part of this description.

Further characteristics and advantages will become apparent from the description of some preferred but not exclusive exemplary embodiments of a braking system according to the present disclosure, illustrated only by way of non-limitative examples with the accompanying drawings, wherein:
Figure 1 is a block diagram schematically illustrating an exemplary embodiment of a braking system for a railway vehicle according to the invention;
Figures 2-4 schematically illustrate some exemplary embodiments of a braking system for a railway vehicle according to the invention.

It should be noted that in order to clearly and concisely describe the present disclosure, the drawings may not necessarily be to scale and certain features of the disclosure may be shown in somewhat schematic form.

Further, when the term "adapted" or "arranged" or "configured" or "shaped", is used herein while referring to any component as a whole, or to any part of a component, or to a combination of components, it has to be understood that it means and encompasses correspondingly either the structure, and/or configuration and/or form and/or positioning of the related component or part thereof, or combinations, such term refers to.

In particular, for electronic and/or software means, each of the above listed terms means and encompasses electronic circuits or parts thereof, as well as stored, embedded or running software codes and/or routines, algorithms, or complete programs, suitably designed for achieving the technical result and/or the functional performances for which such means are devised.

Finally, in the following description and claims, the numeral ordinals first, second, et cetera..., will be used only for the sake of clarity of description and in no way they should be understood as limiting for whatsoever reason.

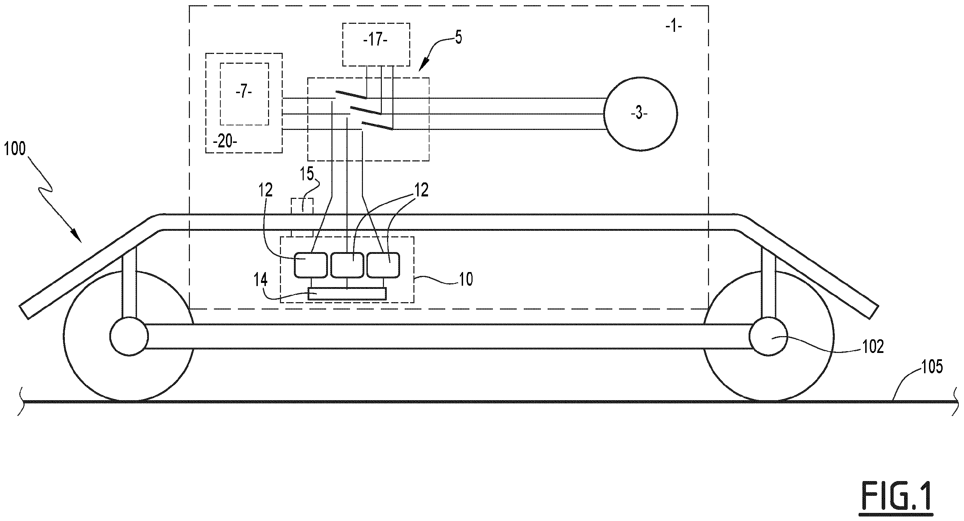

Figures 1 to 4 schematically illustrate some possible embodiments of a braking system according to the invention, schematically indicated by the overall reference number 1.

The railway vehicle, only a portion of which is schematically represented in the figures and therein indicated by the reference number 100, can be formed by any number of units.

The braking system 1 comprises at least:
- at least one rotating electric motor, schematically represented by the reference number 3, which is suitable be installed onboard of the railway vehicle 100; and
- at least one electrically-driven braking device, schematically represented by the reference number 10, which is also suitable to be installed onboard of the railway vehicle 100.

In particular, the electric motor 3 is a traction motor that is usually associated to a motorized axle of the railway vehicle 100, such as the axle of the wheelset indicated in figure 1 by the reference number 102.

The electrical motor 3 is configured to operate at least in a traction mode where it generates electric power suitable to be used for the traction of the railway vehicle 100, and in a passive (or braking) mode where the motor 3 generates electric power suitable to be used for exerting a braking force (hereinafter for the sake of clarity of description referred to as the "first braking force") on at least one associated axle of the railway vehicle 100, e.g. the axle 102 indicated in figure 1.

In one possible embodiment, and according to solutions well known in the art and therefore not described herein in details, the motor 3 is part of or is associated with a drive system of the railway vehicle 100.

This drive system comprises, among others, a traction converter schematically represented in figure 1 by the dotted box 20, which is suitable to provide the motor 3 with feeding power at the voltage level adequate for its operations, and a controller, schematically represented in figure 1 by the dotted box 7.

Usefully, in the braking system 1 according to the present invention, the electrically-driven braking device 10 is configured to exert a braking force (hereinafter for the sake of clarity of description referred to as the "supplementary or second braking force") directly on a rail (schematically represented in figure 1 by the reference number 105) along which the railway vehicle 100 is travelling.

Conveniently, the electrically-driven braking device 10 receives from and uses current generated by the electrically rotating motor 3 for generating power for the second braking force to be exerted on the rail 105.

In particular, the electrically-driven braking device 10 intervenes when the standard emergency brake installed onboard the railway vehicle 100 is not functioning properly and thus cannot intervene.

Under such circumstances, the motor 3 is disconnected from the circuits used in traction mode and the electrically-driven braking device 10 is operatively, i.e. electrically connected to the motor 3.

In this way, in the braking system 1 according to the invention, the power generated by the motor 3 for generating a braking force is used twice, namely both as a wheel-to-rail force when it is used by the motor 3 itself, and as a brake-to-rail force when it is consumed by the electrically-driven braking device 10.

Depending on the applications, e.g. the size of the railway vehicle 100, and therefore the number and type of units/bogies composing it, the system 1 according to the invention can comprise a plurality of motors 3 and a corresponding plurality of electrically-driven braking devices 10.

The various motors 3 and the associated electrically-driven braking devices 10 can be installed in various units/bogies, and/or more than one motor 3 and one associated electrically-driven braking device 10 can be installed on the same bogie.

Further, the or each electrically-driven braking device 10 can be installed in a rest position, for instance at or close to the frame of a respective bogie of the railway vehicle 100, and it can comprise or be associated to a position-adjusting device, schematically indicated for simplicity only in figure 1 by the reference number 15.

The device 15 is configured to adjust the position of at least part of the electrically-driven braking device 10 relative to the rail 105, and in particular the vertical distance there between.

In this way, it is possible for example to compensate for wearing of components, such as wearing of wheels.

Further, in some possible embodiments, the device 15 may assume the configuration or functions as a dropping mechanism.

For instance, when the electrically-driven braking device 10 has to intervene, the dropping mechanism 15 may release an actuator normally holding the braking device 10 in a rest position, so as to allow the braking device 10 or at least part thereof to move closer to the rail 105.

In one possible embodiment, the or each rotating electric motor 3 comprises or is constituted by a permanent magnet motor, e.g. a three-phase permanent magnet motor.

In one possible embodiment, the or each electrically-driven braking device 10 comprises at least one coil 12 which receives from and uses current generated by the electrically rotating motor 3 for generating the second braking force to be exerted directly on the rail 105.

In the exemplary embodiment illustrated, the or each electrically-driven braking device 10 comprises three coils, each connected to a respective phase of the associated motor 3.

In one possible embodiment, the or each electrically-driven braking device 10 comprises or is constituted by a magnetic friction brake.

In one possible embodiment, the magnetic friction brake comprises at least one brake pad, schematically represented in figure 1 by the reference number 14, which is operatively connected to the at least one coil 12, and is pressed onto the rail 105 by the magnetic force generated by the at least one coil 12 when electrically fed by the motor 3.

In this way, a supplementary braking force is exerted on the rail 105 due to the friction of the brake pad 14 and the magnetic attractive force.

For instance, the contact pad 14 can be brought in the position suitable for exerting the pressure onto the rail 105 by using the device 15.

In a further possible embodiment, the or each electrically-driven braking device 10 comprises or is constituted by an eddy current rail brake.

In yet a further possible embodiment, the or each electrically-driven braking device 10 comprises both a magnetic friction brake and an eddy current rail brake.

In one possible embodiment, the eddy current rail brake has no mechanical contact with the rail 105, and the supplementary braking force, exerted in a contact less manner, is due only to the magnetic drag force created by the coil 12, for example moving versus the rail 100 at vehicle speed.

In one possible embodiment, the eddy current rail brake comprises at least one sacrificial contact plate configured to get into physical contact with the rail 105, and the supplementary braking force is due to a combination of the magnetic drag force created by the coil 12 and the friction of the rail contact plate 14.

According to some embodiments, the sacrificial contact plate can be used in addition or in alternative to the contact plate 14.

By using the sacrificial plate, it is possible to eliminate or at least to reduce the need for adjusting the position, and in particular the height of the eddy current brake relative the rail 105.

Further, the system 1 according to this embodiment utilizes the attractive force between the eddy current rail brake and the rail 105 to enable having a brake force at lower speed than for a pure eddy current brake, thus contributing to further reduce also the size of the required mechanical holding/parking brake.

In one possible embodiment, the braking system 1 according to the present invention further comprises at least one switching device, schematically represented in figure 1 by the reference number 5, which can be switched between a first position where the electrically-driven braking device 10 is electrically disconnected from the rotating electric motor 3, and a second position where the electrically-driven braking device 10 is electrically connected to and receives current from the rotating electric motor 3 for generating said braking force to be exerted on said rail.

Such switching device 5 may for example comprise or be constituted by a circuit breaker or a contactor.

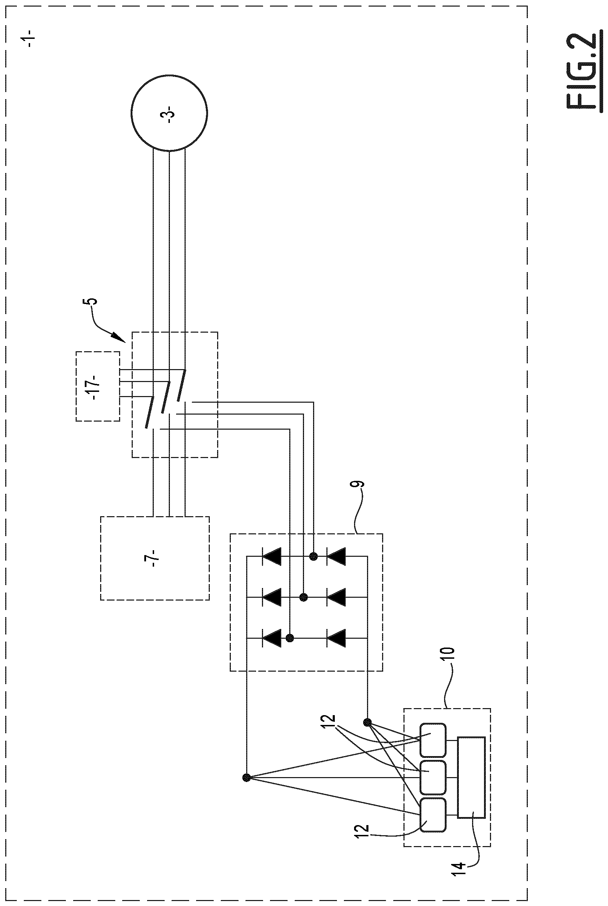

In one possible embodiment, the braking system 1 further comprises a passive rectifier, schematically represented in figure 2 by the reference number 9, which is positioned between the at least one switching device 5 and the electrically-driven braking device 10, and in particular the coil(s) 12.

The use of a rectifier allows minimizing the design changes necessary to use the present rail brake systems as these are supplied by direct current.

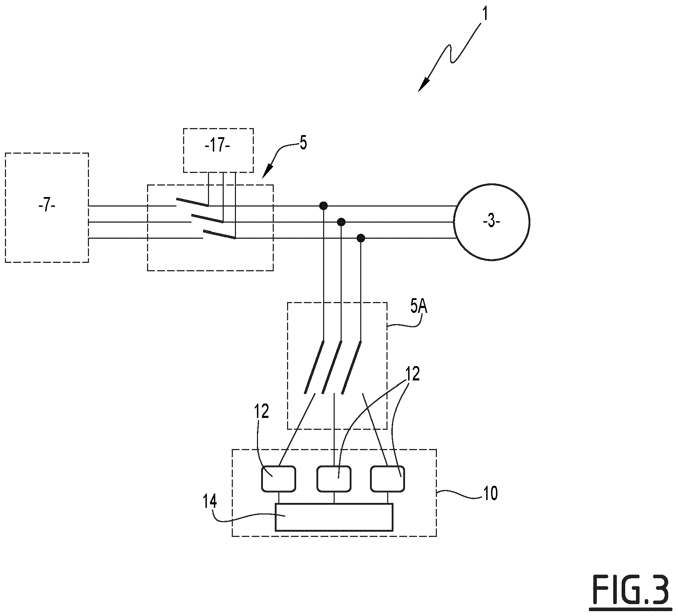

In a further possible embodiment, as schematically illustrated in figure 3, the at least one switching device 5 comprises a first switching device, e.g. a circuit breaker and a second switching device 5A, e.g. a contactor

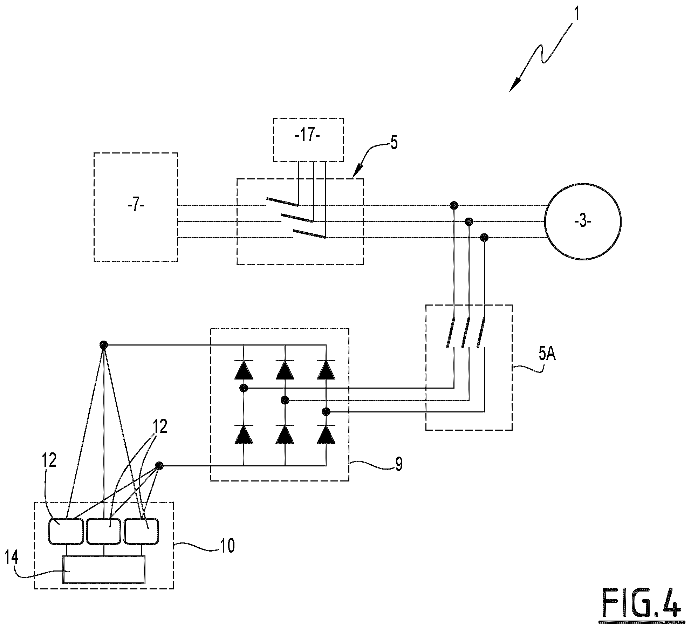

In a possible variant of this embodiment, as illustrated in figure 4, between the second switching device 5A and the coil(s) 12 there is also provided a rectifier 9.

In one possible embodiment, the or each switching device 5, 5A used, is configured to switch and connect the electrically-driven rail braking device 10 to and receive power from the motor 3 upon a determined control signal, for example holding the or each switching device 5 in its/their assumed state, is lost.

In another possible embodiment, the braking system 1 further comprises at least one electronic controller which is configured to cause the at least one switching device 5 to switch into said second position under at least one determined operative condition.

The at least one electronic controller can be an electronic controller, indicated in the figures by a dotted box 17, specifically dedicated to perform the tasks/functionalities provided for the braking system 1 according to the invention, or a controller (or part thereof) already used on board of the railway vehicle 100 for performing also other tasks/functionalities, such as the controller of the drive system above mentioned, e.g. the controller of the traction converter 20, schematically represented in the figures by the dotted box 7.

Also according to this embodiment, when there is the need of using the electrically-driven braking device 10, the at least one controller 17 (or 7) causes the or each switching device 5, 5A to switch and connect the electrically-driven rail braking device 10 to and receive power from the motor 3.

In this way, current is supplied from the motor 3 to the coil(s) 12 of the electrically-driven braking device 10, thus generating the supplementary braking force.

In one possible embodiment, for example for redundancy reasons, both controllers 7 and 17 can be configured for controlling the or each switching device 5, 5A.

For example, to this end, the controller 17 can be configured as the main controller, and the controller 7 of the traction converter can be configured as the deputy one.

The controller(s) 7/17 can be of concentrated type, namely formed by a unique part/device, or of distributed type, i.e. formed by two or more parts/devices collaboratively associated to each other, and the or each part/device can constituted by, or comprise, any suitable processor-based device, e.g. a processor of a type commercially available, suitably programmed and provided to the extent necessary with circuitry, in order to perform the innovative functionalities devised for the braking system 1 according to the present invention. The term processor has to be interpreted herein as encompassing any suitable processor-based device, e.g. a microprocessor, microcontroller, a microcomputer, a programmable logic controller, an application specific integrated circuit, or any other programmable circuit, et cetera.

For example, if the standard emergency brake fails in a driven axle of the railway vehicle 100, the electrically-driven braking device 10 can be activated as a kind of fall-back brake in the affected axle. The or each switching device, such as the switching device 5 normally connecting the motor 3 to the motor converter 20, is switched and the motor 3 is connected to the electrical circuit of the electrically-driven braking device 10 which is thus supplied directly from the motor 3, according to a solution simple, robust, and reliable. The controller 17 or 7 may trigger also the release of the dropping mechanism 15 in the configurations where such dropping mechanism 15 is used.

Hence, it is evident from the foregoing description that the system 1 according to the present invention allows achieving the intended aim since the mechanical brake used in known braking systems is replaced at least partially, if not completely, by the above described electrical braking.

These results are achieved according to a simple solution which exploits the traction motor(s) already present on railway vehicles, and can be easily installed in new railway vehicles as well as for retrofitting railway vehicles already in service.

Hence, another aspect of the present invention relates to any type of suitable railway vehicle 100 comprising such a system 1.

In particular, the braking system 1 according to the disclosure can be considered as constituting and/or used as a fall-back emergency braking system.

The system 1 thus conceived is susceptible of modifications and variations, all of which are within the scope of the inventive concept as defined in particular by the appended claims; for example, one or more of the components previously described can be replaced by different types of functionally equivalent components, and at least some of the various components can be positioned differently, provided that such variations allow in any case to properly perform the tasks/functionalities foreseen within the frame of the present invention.

All the details may furthermore be replaced with technically equivalent elements.

## Claims

1. A braking system (1) for a railway vehicle (100), **characterized in that** it comprises at least:
- a rotating electric motor (3) suitable be installed onboard of the railway vehicle (100), said rotating electric motor (3) being configured to operate in a traction mode where it generates electric power suitable to be used for the traction of the railway vehicle (100), and in a passive mode where the motor (3) generates electric power suitable to be used for exerting a first braking force on at least one associated part of a wheelset (102) of the railway vehicle (100);
- an electrically-driven braking device (10) which is suitable to be installed on the railway vehicle (100) and is configured to exert a second braking force directly on a rail (105) along which the railway vehicle (100) is travelling, wherein said electrically-driven braking device (10) receives from and uses current generated by the electrically rotating motor (3) for generating said second braking force to be exerted directly on the rail (105).

2. The braking system (1) according to claim 1, wherein said electrically-driven braking device (10) comprises at least one coil (12) which receives from and uses current generated by the electrically rotating motor (3) for generating said second braking force to be exerted directly on the rail.

3. The braking system (1) according to claim 1 or 2, wherein said electrically-driven braking device (10) comprises or is constituted by a magnetic friction brake.

4. The braking system (1) according to claim 1 or 2, wherein said electrically-driven braking device (10) comprises or is constituted by an eddy current rail brake.

5. The braking system (1) according to claim 1 or 2, wherein said electrically-driven braking device (10) comprises a magnetic friction brake and an eddy current rail brake.

6. The braking system (1) according to claim 4 or 5, wherein the eddy current rail brake is configured to be positioned spaced apart from and exerts a second braking force on the rail (105) in a contactless manner.

7. The braking system (1) according to claim 4 or 5, wherein the eddy current rail brake comprises a sacrificial contact plate configured to get into physical contact with the rail (105).

8. The braking system (1) according to claim 3 or 5, wherein said magnetic friction brake comprises a brake pad (14) which is configured to be pressed onto the rail (105) by the magnetic force generated by the magnetic friction brake.

9. The braking system (1) according to one or more of the previous claims, wherein it further comprises a device (15) configured to adjust the position of at least part of the electrically-driven braking device (10) relative to the rail (105).

10. The braking system (1) according to one or more of the previous claims, wherein it further comprises at least one switching device (5) which can be switched between a first position where the electrically-driven braking device (10) is electrically disconnected from the rotating electric motor (3), and a second position where the electrically-driven braking device (10) is electrically connected to and receives current from the rotating electric motor (3) for generating said second braking force to be exerted on said rail (105).

11. The braking system (1) according to claim 10, wherein it further comprises at least one electronic controller (17, 7) which is configured to cause the at least one switching device (5) to switch and connect the electrically-driven braking device (10) to and receive power from the rotating electric motor (3).

12. The braking system (1) according to one or more of claims 10 and 11, wherein it further comprises a passive rectifier (9) positioned between the at least one switching device (5) and the electrically-driven braking device (10).

13. The braking system (1) according to claim 10, wherein least one switching device (5) is configured to switch and connect the electrically-driven braking device (10) to and receive power from the rotating electric motor (3) upon a predetermined control signal is lost.

14. The braking system (1) according to one or more of the previous claims, wherein said rotating electric motor (3) comprises or is constituted by a permanent magnet motor.

15. A railway vehicle (100) comprising a braking system (1) according to one or more of the previous claims.
